# EUROPÄISCHE PATENTSCHRIFT

(11) **EP 2 459 899 B1**
(45) Veröffentlichungstag und Bekanntmachung des Hinweises auf die Patenterteilung: **22.02.2017**
(21) Anmeldenummer: 10795919.9
(22) Anmeldetag: 20.07.2010
(51) Int. Cl.: F16C 17/02, F16F 15/26

(54) **AUSGLEICHSWELLE**
COUNTERSHAFT
ARBRE D'ÉQUILIBRAGE

(30) Priorität: 30.07.2009 DE 102009035684; 10.09.2009 DE 102009040813
(43) Veröffentlichungstag der Anmeldung: 06.06.2012
(73) Patentinhaber: Herzog Intertec GmbH, 78601 Mahlstetten (DE)
(72) Erfinder: HERZOG, Ewald, 78601 Mahlstetten (DE); HERZOG, Raphael, 78601 Mahlstetten (DE); WILL, Patricia, 78601 Mahlstetten (DE)
(74) Vertreter: Maser, Jochen
(86) Internationale Anmeldenummer: PCT/EP2010/004408
(87) Internationale Veröffentlichungsnummer: WO 2011/012239

(56) Entgegenhaltungen:
- EP-A2- 1 775 484
- DE-A1-102007 009 800
- DE-A1-102007 027 990
- FR-A1- 2 619 881
- JP-A- 11 101 311

## Beschreibung

Die Erfindung betrifft eine Ausgleichswelle für einen Ein- oder Mehrzylindermotor mit wenigstens einem Unwuchtgewichtsabschnitt und wenigstens einer Lagerstelle gemäß dem Oberbegriff des Anspruchs 1.

Aus der WO 2007/121861 A1 ist eine Ausgleichswelle für einen Ein- oder Mehrzylindermotor mit wenigstens einem Unwuchtgewichtsabschnitt und wenigstens einer Lagerstelle bekannt, die dem wenigstens einen Unwuchtgewichtsabschnitt zugeordnet ist. Die Lagerstelle umfasst eine Lauffläche bzw. Umfangsfläche, welche sich nur partiell über einen Umfang der Lagerstelle erstreckt, so dass eine bei Rotation der Ausgleichswelle resultierende Zentrifugalkraft innerhalb einem Bereich der Lagerstelle liegt, der durch die partiell über den Umfang der Lagerstelle sich erstreckende Umfangsfläche gebildet ist. Bei einer Ausführungsform dieser Ausgleichswelle ist vorgesehen, dass die Lagerstelle mit einem Laufring versehen ist, der die partiell ausgebildete Umfangsfläche der Lagerstelle umgibt, so dass eine geschlossene Lauffläche bei einer Reduzierung der rotierenden Massen im Bereich der Lagerstelle ermöglicht ist. Dieser Laufring ist auf der partiell ausgebildeten Umfangsfläche der Lagerstelle durch eine kraft- und/oder form- und/oder stoffschlüssige Verbindung mit der Lauffläche verbunden. Durch die stetigen Anforderungen der Belastbarkeit und in der Präzision ist erforderlich, solche Ausgleichswellen weiterzubilden.

Deshalb liegt der Erfindung die Aufgabe zugrunde, eine Ausgleichswelle für einen Ein- oder Mehrzylindermotor mit wenigstens einem Unwuchtgewichtsabschnitt und wenigstens einer Lagerstelle vorzuschlagen, bei der in einfacher Weise der Laufring zur partiell ausgebildeten Umfangsfläche der Lagerstelle durch eine kraft- und/oder form- und/oder stoffschlüssige Verbindung zu verbinden ist, und die Intensivierung des Leichtbaus unter Beibehaltung der Verwendung als Gleitlager durch einen geschlossenen hydrodynamischen Schmierfilm oder die Bildung eines Wälzlagers im Motorgehäuse ermöglicht.

Diese Aufgabe wird erfindungsgemäß durch die Merkmale des Anspruchs 1 gelöst. Weitere vorteilhafte Ausgestaltungen und Weiterbildungen sind in den weiteren Ansprüchen angegeben.

Durch die erfindungsgemäße Ausgestaltung einer Ausgleichswelle bei der die Umfangsfläche der Lagerstelle zur Aufnahme des Laufringes einem Aufnahmebereich aufweist, welcher zumindest eine Anlagefläche, vorzugsweise eine in radialer Richtung verlaufende Anlagefläche aufweist, wird ermöglicht, dass eine präzise Positionierung des Laufringes zur Lagerstelle gegeben ist, um die kraft- und/oder form- und/oder stoffschlüssige Verbindung zu schaffen. Gleichzeitig bleibt durch eine einfache Herstellung der Ausgleichswelle, welche durch den Aufnahmebereich ergänzt wird, die präzise Positionierung erhalten. Darüber hinaus ist durch den Aufnahmebereich mit zumindest einer Anlagefläche, die vorzugsweise in radialer Richtung ausgerichtet ist, eine axiale Positionierung und/oder Fixierung des Laufringes bezüglich der Ausgleichswelle in einfacher Weise gegeben. Zudem kann durch den Aufnahmebereich der vorzugsweise an, auf oder in der Umfangsfläche der Lagerstelle eine weitere Reduzierung im Volumen der Ausgleichswelle im Bereich der Lagerstelle geschaffen werden. Durch die Aufnahmebereiche in der Umfangsfläche der Lagerstelle wird gemäß einer ersten erfindungsgemäßen Alternative ermöglicht, dass beispielsweise ein oder beide äußeren-axialen Randbereiche des Laufringes zur kraft- und/oder form- und/oder stoffschlüssigen Verbindung verwendet wird. Eine weitere alternative erfindungsgemäße Ausgestaltung sieht vor, dass der Aufnahmebereich an oder auf der Umfangsfläche der Lagerstelle derart ausgestaltet ist, dass zumindest ein mittlerer Bereich des Laufringes zur kraft- und/oder form- und/oder stoffschlüssigen Verbindung vorgesehen ist. Diese variable und vielfältige Ausgestaltung des Aufnahmebereiches an, in oder auf der Umfangsfläche der Lagerstelle ermöglicht, unterschiedliche Geometrien und Konturen eines Laufringes gesichert, kraft- und/oder form- und/oder stoffschlüssig aufzunehmen.

Nach einer bevorzugten Ausgestaltung der Erfindung ist an die Umfangsfläche der Lagerstelle in Umfangsrichtung angrenzend zumindest eine Stülpfläche vorgesehen, welche die Querschnittsfläche der Lagerstelle verringert. Diese Stülpfläche ermöglicht ein einfaches Überstülpen des Laufringes über die Ausgleichswelle, um den Laufring zur Lagerstelle zu positionieren, bevor dieser in den vertieften Aufnahmebereich eingesetzt wird.

Bevorzugt ist vorgesehen, dass der gegenüber der Umfangsfläche der Lagerstelle der Aufnahmebereich vertieft ausgebildet ist und zumindest eine Anlagefläche aufweist, die ringförmig ausgebildet ist und sich nur teilweise entlang der Breite des Aufnahmebereiches erstreckt. Dadurch wird sichergestellt, dass eine Anlage der inneren Umfangsfläche des Laufringes an der Lagerstelle, bzw. an der Anlagefläche des vertieften Aufnahmebereiches gegeben ist.

Nach einer weiteren bevorzugten Ausgestaltung der Erfindung ist vorgesehen, dass die Anlagefläche des Aufnahmebereiches gegenüber der Umfangsfläche radial derart nach innen versetzt ist, dass die Lauffläche des Laufringes gegenüber der an den Aufnahmebereich angrenzenden Umfangsfläche erhaben ist. Dadurch wird ermöglicht, dass der Laufring vorzugsweise passgenau in den Aufnahmebereich eingebettet ist, damit eine optimale Stütz- und Haltekraft zwischen dem Laufring und der Lagerstelle gegeben ist.

Nach einer weiteren bevorzugten Ausgestaltung der Erfindung ist vorgesehen, dass jeweils an eine axiale Seitenfläche des Aufnahmebereichs eine radiale Anlagefläche des Aufnahmebereiches angrenzt und eine Anlageschulter bildet. Somit ist bei dieser Ausführungsform vorgesehen, dass nur ein radial innenliegender Randbereich des Laufringes an einer jeweils im Aufnahmebereich gebildeten Schulter anliegt, wobei zwischen den Schultern zumindest eine weitere Vertiefung vorgesehen ist, so dass für den Laufring jeweils nur im äußeren Randbereich eine definierte Anlage an dem vertieften Aufnahmebereich gegeben ist.

Eine bevorzugte Ausgestaltung der Erfindung sieht vor, dass zumindest eine axiale Seitenfläche des Laufringes an zumindest einer axialen Seitenfläche des Aufnahmebereiches positioniert ist. Diese Ausführungsform, bei der eine axiale Seitenfläche des Laufringes an eine axiale Seitenfläche des Aufnahmebereichs angrenzt und daran positioniert ist, ermöglicht eine sogenannte einseitige Lagerung des Laufringes. Bei dieser Ausführungsform ist der Laufring bevorzugt durch eine Schweißverbindung oder Klebeverbindung mit dem Grundkörper beziehungsweise des daran angeordneten Aufnahmebereichs verbunden. Eine alternative Ausführungsform sieht vor, dass beide axialen Stirnflächen des Laufringes an den axialen Seitenfläche des Aufnahmebereiches durch eine Presspassung angeordnet sind. Dadurch kann eine sichere Positionierung des Laufringes zur Lagerstelle ermöglicht werden. Darüber hinaus kann nach dem Positionieren über eine Presspassung ohne weitere Hilfsmittel ein weiterer Fügevorgang durchgeführt werden.

Entlang zumindest einem zwischen einer der Umfangfläche und der aus dem Aufnahmebereich radial herausragenden Bereich der axialen Stirnfläche des Laufringes ist bevorzugt eine Schweißverbindung oder Lötverbindung vorgesehen. Vorzugsweise erfolgt eine Laserschweißung, so dass eine geringe Eindringtiefe der durch das Schweißen erzeugten Wärme sowohl in den Laufring als auch in die Umfangsfläche der Ausgleichswelle erfolgt.

Nach einer weiteren bevorzugten Ausgestaltung der Erfindung ist vorgesehen, dass der in den insbesondere vertieften Aufnahmebereich einsetzbare und durch ein Härteverfahren behandelte Laufring einen unbehandelten, vorzugsweise nicht gehärteten Schulterbereich, insbesondere eine axiale Stirnfläche und innenumfangsseitigen Randbereich, aufweist. Dadurch ist die Schweißbarkeit zwischen dem Laufring und dem Grundkörper der Ausgleichswelle gegeben. Bevorzugt werden die Laufringe durch ein Härteverfahren derart gehärtet, dass zumindest ein stirnseitiger und innenringseitiger Randbereich des Randbereichs des Laufringes nicht durch das Härteverfahren behandelt werden, so dass die gute Schweißbarkeit erhalten bleibt.

Nach einer weiteren alternativen Ausgestaltung der Erfindung ist vorgesehen, dass die Anlagefläche des Aufnahmebereiches gegenüber einem benachbarten Abschnitt der Ausgleichswelle erhöht oder radial hervorstehend ausgebildet ist. Dabei ist die Breite der Anlagefläche des Aufnahmebereichs bevorzugt an die Breite des Laufringes, zumindest im Bereich der Anlagefläche in radialer Richtung gesehen zum Grundkörper, angepasst. Dadurch kann bspw. eine radial verlaufende Schweißnaht zwischen der Anlagefläche des Aufnahmebereichs und dem daran anliegenden Laufring erzielt werden. Diese Ausführungsform ermöglicht, dass bei einer gegenüber dem Grundkörper hervorstehenden Anlagefläche lediglich der Bereich hervorsteht, welcher den Laufring von seiner Innenseite her stützt.

Eine weitere alternative Ausgestaltung der Erfindung sieht zwischen der Anlagefläche des Aufnahmebereiches und den axialen Seitenflächen eine umlaufende Vertiefung oder ein Einstich vor. Dadurch kann beispielsweise eine gute Anlage des Innenumfanges des Laufringes in dem Aufnahmebereich gegeben sein. Diese Ausgestaltung der Vertiefung zwischen der axialen Seitenfläche und der Anlagefläche des Aufnahmeraumes wird bevorzugt bei einer Fixierung des Laufringes in der bevorzugt vertieften Aufnahme durch eine Bördelung eingesetzt. Hierzu ist bevorzugt der Randbereich der Umfangsfläche mit einem umlaufenden Wulst ausgebildet, der durch einen Stemm- oder Bördelvorgang derart bearbeitet wird, dass ein Randbereich des Laufringes lagefixiert zum vertieften Aufnahmebereich gehalten ist.

Zum vereinfachten Umgreifen des Randbereiches des Laufringes und zur Lagefixierung des Laufringes im Aufnahmebereich ist bevorzugt vorgesehen, dass eine axiale Stirnfläche des Laufringes von der Innenumfangsfläche zur Außenumfangsfläche beziehungsweise zur Lauffläche des Laufringes hin geneigt ist. Dadurch hintergreift zunächst die Stirnfläche des Laufringes nach der Umbördelung einen Randbereich der Umfangsfläche und ist darin gesichert gehalten.

Zur Erhöhung der Haltekraft des Laufringes in dem vertieften Aufnahmebereich zur Lagerstelle bei einer Fixierung durch eine Umbördelung ist bevorzugt vorgesehen, dass an der Stirnfläche des Laufringes eine Kontur, wie beispielsweise eine ein- oder mehrstufige, zumindest teilweise umlaufende Schulter vorgesehen ist. Alternativ kann die Kontur auch ein- oder mehrere Kegelflächen, gekrümmte Flächenabschnitte oder eine beliebige Kombination der vorgenannten Konturen umfassen, um die hinterschneidende Kontur an der axialen Stirnfläche des Laufrings auszubilden. Nach der Umbördelung erfolgt somit ein form- und kraftschlüssiger Verbund zwischen dem Randbereich der Umfangsfläche und dem gegenüberliegenden Randbereich des Laufringes, insbesondere der axialen Stirnfläche des Laufringes. Die Kontur bzw. Schulter kann in Umfangsrichtung mit einer veränderbaren Höhe ausgebildet sein, beispielsweise durch einen wellenförmigen oder stufenförmigen Verlauf. Dadurch kann auch eine zusätzliche Sicherung der Aufnahmeposition in radialer Richtung erfolgen.

Nach einer weiteren alternativen Ausgestaltung der Erfindung ist vorgesehen, dass der Laufring an seine Lauffläche angrenzend in axialer Richtung einen Stützabschnitt aufweist, welcher sich zumindest teilweise in radialer Richtung, jedoch nicht vollumfänglich, erstreckt. Dieser Stützabschnitt oder auch Befestigungsabschnitt ermöglicht, eine vergrößerte Anlagefläche des Laufringes an oder in dem Aufnahmebereich, wobei der Laufring selbst bezüglich seiner vollumfänglichen Lauffläche in axialer Erstreckungsrichtung schmäler ausgebildet sein kann. Eine solche Ausführungsform weist den Vorteil auf, dass bspw. eine sehr schmale Lauffläche dem Aufnahmebereich gegenüberliegend, also der Unwucht gegenüberliegend ausgebildet sein kann, da in diesem Bereich nur geringe bis nahezu keine Stützkräfte übertragen werde müssen. Dadurch kann gleichzeitig wiederum eine Gewichtsreduzierung erzielt werden. Dennoch kann ein hinreichend großer Befestigungsbereich durch die Stützoberfläche gegeben sein.

Dieser zusätzliche Stützabschnitt oder Befestigungsabschnitt am Laufring ist bevorzugt mit zumindest einer radialer oder axialer Stirnfläche mit dem Grundkörper verbunden. Diese Befestigung weist den Vorteil auf, dass die Verbindung zwischen dem Laufring und dem Grundkörper in einem Bereich außerhalb der Lauffläche des Laufringes erfolgen kann, so dass dadurch eine vereinfachte Befestigung ermöglicht ist. Dabei können die vorbeschriebenen kraft-, form- oder stoffschlüssigen Verbindungen angewendet werden. Alternativ kann vorgesehen sein, dass der Stützabschnitt beziehungsweise Befestigungsabschnitt durch Punktschweißen, Nieten oder Schrauben in einem Bereich außerhalb der Lauffläche des Laufringes mit dem Grundkörper verbunden wird. Darüber hinaus ermöglicht eine solche Anordnung auch eine Klemmverbindung, in der weitere Klemmelemente an die insbesondere axialen Stirnflächen der Stützoder Befestigungsabschnitte angreift und diesen Laufring unter Klemmung zum Aufnahmebereich positionieren und fixieren.

Die der Erfindung zugrundeliegende Aufgabe wird des Weiteren durch eine Ausgleichswelle für einen Ein- oder Mehrzylindermotor gelöst, welche folgende Merkmale umfasst:

Die Ausgleichswelle weist wenigstens einen Umwuchtgewichtsabschnitt und wenigstens eine Lagerstelle, die dem wenigstens einen Umwuchtgewichtsabschnitt zugeordnet ist auf, wobei die Lagerstelle eine radiale Umfangsfläche umfasst, welche sich nur partiell über einen Umfang der Lagerstelle erstreckt, so dass eine bei Rotation der Ausgleichswelle resultierende Zentrifugalkraft innerhalb einem Bereich der Lagerstelle liegt, der durch die partiell über den Umfang der Lagerstelle sich erstreckenden Umfangsfläche gebildet ist. Die Ausgleichswelle umfasst einen Laufring, der die partiell ausgebildete Umfangsfläche der Lagerstelle umgibt und durch eine kraft- und/oder form- und/oder stoffschlüssige Verbindung mit der Lagerstelle verbunden ist. Des Weiteren weist die Ausgleichswelle eine radiale Umfangsfläche der Lagerstelle mit einem Umfangswinkel von weniger als 180° auf. Diese Ausgleichswelle ermöglicht eine gewichtsreduzierte Ausgestaltung. Des Weiteren kann durch eine solche Ausgestaltung eine einfache Fertigung eines Grundkörpers der Ausgleichswelle hergestellt werden.

Bevorzugt ist vorgesehen, dass zwischen den radialen Enden der Umfangsfläche der Lagerstelle sich eine Versteifungskontur erstreckt. Diese Versteifungskontur kann in Abhängigkeit der erforderlichen Gesamtsteifigkeit der Augleichswelle im Bereich der Lagerstelle ausgebildet sein. Dementsprechend kann diese Versteifungskontur angepasst werden.

Bevorzugt ist eine dachförmige Versteifungskontur vorgesehen. Diese dachförmige Versteifungskontur kann bspw. als Satteldach, Spitzdach, Walmdach oder Tonnendach sowie als Kegel- oder Mansardendach ausgebildet sein. Des Weiteren kann alternativ vorgesehen sein, dass eine Versteifungskontur ausgebildet ist, welche gegenläufig zur Umfangsfläche der Lagerstelle verläuft. Ebenso können weitere mehreckförmige oder gekrümmte Versteifungskonturen vorgesehen sein.

Bevorzugt ist bei der Ausgestaltung der Versteifungskontur vorgesehen, dass diese mit der Umfangsfläche eine Querschnittsfläche der Lagerstelle bildet, bei der die Rotationsachse außerhalb der Querschnittsfläche oder an die Versteifungskontur angrenzend liegt. Dadurch kann eine besonders steife Anordnung gegeben sein.

Die weiteren in den Unteransprüchen gegebenen Ausführungsformen zur Ausgleichswelle, bei der für die Umfangsfläche der Lagerestelle zur Aufnahme des Lagerrings einen Aufnahmebereich aufweist, gelten auch für die Ausgleichswelle mit einer Umfangsfläche der Lagerstelle, die einen Umfangswinkel von weniger als 180° aufweist.

Eine weitere alternative Ausgestaltung der Erfindung sieht vor, dass der an der Lagerstelle angeordnete Laufring in einem der Zentrifugalkraft gegenüberliegendem Bereich der Lagerstelle eine in der Breite verringerte Lauffläche aufweist. Diese verringerte Breite kann dabei durch eine symmetrische als auch asymmetrische Reduzierung der Breite im Vergleich zur Breite des Laufringes in dem Bereich erfolgen, in dem die Zentrifugalkraft wirkt. Ebenso können auch zwei oder mehrere verringerte Laufringbreiten in einem der Zentrifugalkraft gegenüberliegenden Bereich der Lagerstelle ausgebildet sein.

Des Weiteren ist bevorzugt vorgesehen, dass der auf der Lagerstelle angeordnete Laufring ein Innenring eines Wälzlagers ist, welches auf dem Aufnahmebereich befestigbar ist. Die Ausgleichswellen kann somit bevorzugt mit einem kompletten Wälzlager bestückt werden, bevor diese Ausgleichswelle in einen Motorblock eingebaut wird. Bei den Wälzlagern können die für Wälzlager typischen Bauformen entsprechend der Anwendung und Ausgestaltung der Lagerstelle im Motorblock ausgewählte werden. Somit können verschiedene Radiallager, wie beispielsweise Rillenkugellager öder Zylinderrollenlager als auch Nadellager oder dergleichen, eingesetzt werden.

Nach einer weiteren bevorzugten Ausgestaltung der Erfindung weist ein Endabschnitt und/oder ein daran angrenzender Unwuchtgewichtsabschnitt und/oder eine daran angrenzende Lagerstelle der Ausgleichswelle jeweils einen Stülpdurchmesser auf, der kleiner als ein Innendurchmesser des Laufringes beziehungsweise des Innenrings des Wälzlagers ist. Dadurch wird zunächst ein axiales Aufstecken des Laufringes auf die Ausgleichswelle ermöglicht, um anschließend durch eine vertikale Bewegung den Laufring zur Lagerstelle, insbesondere im Aufnahmeraum der Lagerstelle, zu positionieren, damit dieser Laufring anschließend kraft- und/oder form- und/oder stoffschlüssig verbunden wird. Dabei können die Geometrien des Endabschnittes, des Unwuchtgewichtsabschnittes und der Lagerstelle unabhängig voneinander an die jeweiligen aufzunehmenden Belastungen beziehungsweise ausgleichenden Kräfte angepasst sein.

Der Stülpdurchmesser des Unwuchtgewichtsabschnittes wird bevorzugt durch eine Umfangsfläche mit zumindest einer Stülpfläche gebildet. Zumeist weisen die Unwuchtgewichtsabschnitte einen in etwa kreisbogensegmentförmigen Querschnitt auf, der durch wenigstens zwei Stülpflächen und die Umfangsfläche gebildet ist. Analoges kann für die Ausgestaltung der Lagerstelle gelten. In einzelnen Ausführungsformen kann bevorzugt zwischen der Umfangsfläche und der daran angrenzenden Stülpfläche eine weitere Stülpfläche als Abflachung, Wölbung oder dergleichen vorgesehen sein, um die Anforderungen zu erfüllen, dass der Stülpdurchmesser des Laufrings, der auch dem Innenring des Wälzlagers entspricht, geringfügig kleiner als die Innendurchmesser des Laufringes ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht einer erfindungsgemäßen Ausführungsform einer Ausgleichswelle,
- Figur 2: eine schematische Seitenansicht der Ausgleichswelle gemäß Figur 1,
- Figur 3: eine schematische Schnittdarstellung entlang der Linie II - II in Figur 2,
- Figur 4: eine schematisch vereinfacht dargestellte Ausgleichswelle gemäß Figur 1 im Teillängsschnitt während eines Montageprozesses des Laufringes zur Lagerstelle,
- Figur 5: einen schematischen Längsschnitt der Ausgleichswelle gemäß Figur 1,
- Figur 6a: eine schematisch vergrößerte Detaildarstellung A gemäß Figur 4,
- Figur 6b: eine schematisch vergrößerte Detaildarstellung einer alternativern Ausführungsform zu Figur 6a,
- Figur 7a: eine schematische Schnittdarstellung einer alternativen Ausgleichswelle zu Figur 5,
- Figur 7b: eine schematisch vergrößerte Teildarstellung Y gemäß Figur 7a,
- Figur 8: eine schematische Schnittdarstellung einer alternativen Ausführungsform zu Figur 5,
- Figur 9: eine schematische Schnittdarstellung einer weiteren alternativen Ausgleichswelle zu Figur 5,
- Figur 10a: eine schematisch vergrößerte Detaildarstellung B gemäß Figur 9 vor dem Verstemmen,
- Figur 10b: eine schematisch vergrößerte Detaildarstellung B gemäß Figur 9 nach dem Verstemmen,
- Figuren 10c und d: schematisch vergrößerte Teilansichten einer Seitenfläche eines Laufringes,
- Figur 11: eine schematische Schnittdarstellung einer weiteren alternativen Ausgleichswelle gemäß Figur 5,
- Figur 12a: eine schematisch vergrößerte Detaildarstellung C gemäß Figur 11 vor dem Bördeln,
- Figur 12b: eine schematisch vergrößerte Detaildarstellung B gemäß Figur 11 nach dem Bördeln,
- Figuren 13a bis c: schematische Ansichten einer weiteren alternativen Ausgleichswelle,
- Figuren 14a bis e: schematische Ansichten von weiteren alternativen Ausführungsformen zur alternativen Ausgleichswelle gemäß Figur 13a,
- Figuren 15a bis e: schematische Seitenansichten von alternativen Ausgestaltungen der Laufringe für eine Ausgleichswelle und
- Figuren 16a bis d: eine perspektivische Teilansicht und Schnittansichten einer weiteren alternativen Ausführungsform der Ausgleichswelle.

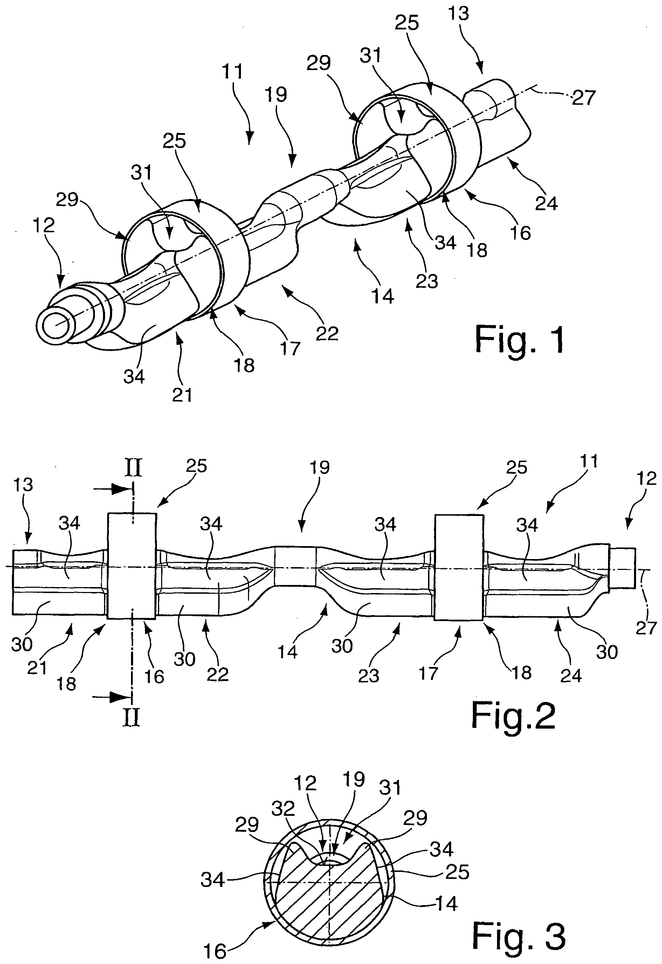

In Figur 1 ist perspektivisch eine Ausführungsform einer Ausgleichswelle 11 dargestellt. Eine solche Ausgleichswelle 11 ist für einen Ein- oder Mehrzylindermotor vorgesehen und dient dem Ausgleich von Massenkräften zweiter Ordnung. Üblicherweise werden bei Mehrzylindermotoren zwei Ausgleichswellen 11 versetzt zueinander angeordnet, die dann in doppelter Motordrehzahl gegenläufig rotieren. An einem in Figur 1 bezeichneten Endabschnitt 12 der Ausgleichswelle 11 ist ein nicht näher dargestellter Antrieb, wie bspw. ein Kettenrad, vorgesehen, welches die Ausgleichswelle 11 antreibt. Die Ausgleichswelle 11 umfasst einen Grundkörper 14, an dem eine erste und zweite Lagerstelle 16 und 17 vorgesehen sind. Diese dienen zur Lagerung der Ausgleichswelle 11 in einem Motorblock. Diese Lagerstellen 16, 17 weisen eine Umfangsfläche 18 auf, deren Umfang bevorzugt als ein Umfang der übrigen Abschnitte des Grundkörpers 14 ausgebildet sind. Dadurch kann die Ausgleichswelle 11 in die Lager bzw. Lagerboxen im Motorblock einfach eingeschoben werden, und zwar mit einem Endabschnitt 13 voraus.

Bei dieser Ausführungsform der Ausgleichswelle 11 weist der Grundkörper 14 symmetrisch zur ersten und zweiten Lagerstelle 16, 17 Unwuchtgewichtsabschnitte 21 bis 24 auf. Die Unwuchtgewichtsabschnitte 21 bis 24 sind bevorzugt zumindest abschnittsweise durch eine Umfangsfläche 30 und zwei Stülpflächen 34 gebildet, welche insbesondere einen bogensegmentförmigen Querschnitt bilden. Dabei sind bevorzugt zwischen den Endabschnitten 12, 13 und den Lagerstellen 16, 17 sowie den Unwuchtgewichtsabschnitten 21 bis 24 fließende Übergänge vorgesehen. Bei der Dimensionierung der Unwuchtgewichtsabschnitte 21 bis 24 sind die Endabschnitte 12 und 13 ebenso berücksichtigt. Zwischen den Unwuchtgewichtsabschnitten 22 und 23 ist ein Verbindungsabschnitt 19 ausgebildet, der die symmetrische Anordnung der ersten und zweiten Lagerstelle 16, 17 verbindet.

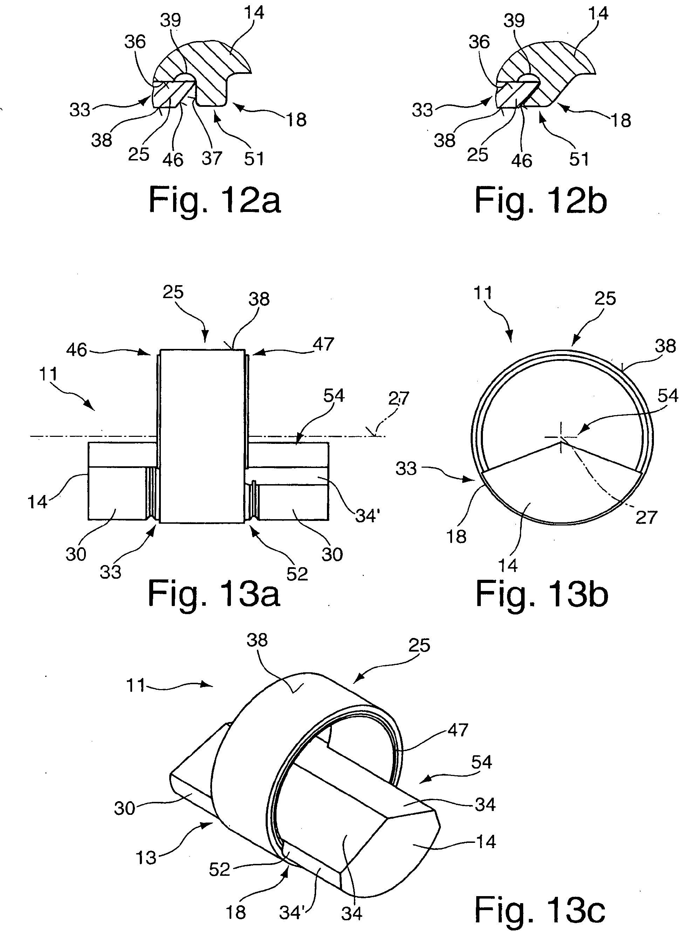

Die erste und zweite Lagerstelle 16, 17 weisen eine partiell über den Umfang der Lagerstelle 16, 17 sich erstreckende Umfangsflächen 18 auf, die gemäß der ersten Ausführungsform bevorzugt in einem Umfangswinkel von 180° bis 359° ausgebildet sein können. Alternativ kann vorgesehen sein, dass diese Umfangsflächen 18 sich auch in einem Umfangswinkel von weniger als 180° erstrecken, wie dies in den Figuren 13a bis c, 14a bis e und 16a bis d dargestellt ist. Bei beiden Ausführungsformen wird eine sogenannte Partiallagerstelle ausgebildet.

Die erste und zweite Lagerstelle 16, 17 sind jeweils von einem Laufring 25 umgeben, der die Umfangsfläche 18 radial umgibt. Dadurch kann die Ausgleichswelle 11 mit einem solchen Laufring 25 in einem Motorblock mit einer bisherigen Lagerung eingesetzt werden, wobei der Laufring 25 sowohl bei einer Gleitlagerung, insbesondere Rollenlagerung als auch bei Wälzlagerung eingesetzt werden kann. Alternativ kann auch vorgesehen sein, dass der Laufring 25 ein Innenring eines kompletten Wälzlagers ist und die Ausgleichswelle 11 mit dem zumindest einen daran befestigten Wälzlager in den Motorblock eingesetzt wird. Gleichzeitig kann durch diese Anordnung eine Gewichteinsparung an der Lagerstelle 16, 17 durch eine zwischen dem Laufring 25 und der Lagerstelle 16, 17 gebildete Vertiefung 31 vorgesehen sein. Die Vertiefung 31 kann, wie bspw. in Figur 3 dargestellt ist, topf- oder wannenförmig ausgebildet sein. Diese Ausgestaltung ist bevorzugt bei einer Lagerstelle 16, 17 vorgesehen, die einen Umfangswinkel von größer 180° aufweist. Bei einem Umfangswinkel von 180° ist eine ebene Fläche vorgesehen, die in einer Rotationsachse 27 liegt. Alternativ kann eine solche ebene Fläche auch oberhalb oder unterhalb der Rotationsachse 27 liegen. Bei einem Umfangswinkel von weniger als 180° kann die Vertiefung 31 dachförmig ausgebildet sein, sofern ein Teil des Grundkörpers sich bis zur Rotationsachse oder über die Rotationsachse erstrecken soll.

Im Hinblick auf die weiteren Möglichkeiten zur Ausführung einer Ausgleichswelle 11 wird vollumfänglich auf die WO 2007/121861 A1 Bezug genommen. Die Ausführungsformen der Ausgleichswelle 11 bzw. des Grundkörpers können auch bei der vorliegenden Erfindung vorgesehen sein.

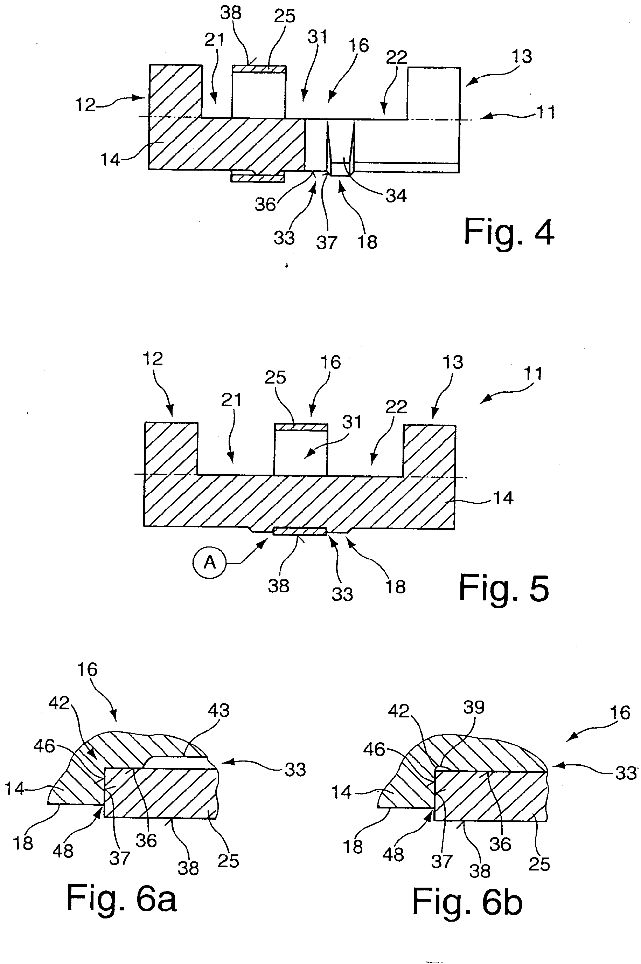

Die erfindungsgemäße Ausgleichswelle 11 gemäß den Figuren 1 bis 3 weist in der Lagerstelle 16, 17 einen vertieften Aufnahmebereich 33 zur Aufnahme und Positionierung des Laufringes 25 auf, wie in Figur 4 in einem Montageschnitt des Laufrings 25 zur Ausgleichswelle 11 und in Figur 5 in einem stark vereinfacht dargestellten schematischen Längsschnitt der Ausgleichswelle gemäß Figur 1 dargestellt ist. Dieser vertiefte Aufnahmebereich 33 ist in der Umfangsfläche 18 der Lagerstelle 16, 17 eingebracht. Folglich ist der vertiefte Aufnahmebereich 33 in axialer Richtung gesehen jeweils durch einen Abschnitt der Umfangsfläche 18 begrenzt bzw. grenzt an die Umfangsfläche 18 an. In radialer Richtung gesehen weist die Umfangsfläche 18 der Lagerstelle 16, 17 eine Stülpfläche 34 auf, die durch eine Verringerung des Umfangsquerschnittes gegeben ist, um ein Überstülpen des Laufringes 25 über den Grundkörper 14 der Ausgleichswelle 11 und ein Positionieren des Laufringes 25 in den vertieften Aufnahmebereich 33 der Lagerstelle 16, 17 zu ermöglichen, wie in Figur 4 dargestellt ist.

Der vertiefte Aufnahmebereich 33 weist eine radial ausgerichtete Anlagefläche 36 auf, welche gegenüber einer Umfangsfläche 18 vertieft angeordnet ist bzw. einen geringeren Durchmesser umfasst. Dadurch werden axiale Seitenflächen 37 gebildet, durch die der vertiefte Aufnahmebereich 33 nutenförmig bzw. U-förmig oder wannenförmig oder dergleichen ausgebildet ist. Die Anlagefläche 36 ist gegenüber der Umfangsfläche 18 vertieft angeordnet, so dass ein in dem Aufnahmebereich 33 positionierter Laufring 25 mit seiner Lauffläche 38 gegenüber der Umfangsfläche 18 erhöht angeordnet ist. Dadurch wird der Laufring 25 in axialer Richtung lagerichtig in dem Aufnahmebereich 33 positioniert. In radialer Umfangsrichtung gesehen ist eine Eingriffsposition zwischen dem Laufring 25 und dem Aufnahmebereich 33 abhängig von dem Umfangswinkel der Lagerstelle sowie der Größe der Stülpflächen 34.

Zum Fügen des Laufringes 25 zum Grundkörper 14 der Ausgleichswelle 11 ist bevorzugt vorgesehen, dass der Laufring 25 vor dem Fügen durch ein Härteverfahren vorbehandelt wird, jedoch ein äußerer Randbereich des Laufringes 25, insbesondere die axiale Seitenfläche 46 und ein daran angrenzender Randbereich eines Innenumfanges, nicht vorbehandelt werden bzw. unbehandelt bleiben, um die Schweißbarkeit sicherzustellen. Nach dem Vorbehandeln durch ein Härteverfahren wird der Laufring 25 über den Grundkörper 14 der Ausgleichswelle 11 gestülpt und zum Aufnahmebereich 33 positioniert. Anschließend wird der Laufring 25 bevorzugt in den Aufnahmebereich 33 eingesetzt und insbesondere eingepresst, so dass eine kraft- und/oder formschlüssige Verbindung gegeben ist. Anschließend erfolgt eine stoffschlüssige Verbindung zwischen dem Laufring 25 und dem Aufnahmebereich 33, wobei insbesondere ein Laserschweißvorgang ausgewählt wird. Die Ausgleichswelle 11 wird zwischen Spitzen gespannt, so dass die weiteren Arbeitsschritte, wie Rundschleifen und Fertigstellen der Lagersitze, erfolgen können.

In Figur 6a ist eine schematisch vergrößerte Detailansicht eines in Figur 5 mit A gekennzeichneten Eckbereiches des Aufnahmebereiches 33 dargestellt. Bei dieser ersten alternativen Ausführungsform ist vorgesehen, dass die Anlagefläche 36 ringförmig ausgebildet ist und an die Seitenfläche 37 angrenzt, so dass eine umlaufende Schulter 42 ausgebildet ist. Zwischen den beiden links und rechts in dem Aufnahmebereich 33 gebildeten Schultern 42 ist eine weitere Vertiefung 43 vorgesehen, so dass der Laufring 25 lediglich mit einem radial äußeren Randbereich an der Schulter 42 des Aufnahmebereichs 33 anliegt. Bevorzugt ist zwischen der axialen Stirnfläche 46 des Laufringes 25 und der Seitenfläche 37 des Aufnahmebereiches 33 nach dem Einsetzen des Laufringes 25 in den Aufnahmebereich 33 eine Presspassung ausgebildet, durch welche der Laufring 25 zumindest in dem Aufnahmebereich 33 vorfixiert wird. Anschließend kann ein zwischen der Seitenfläche 37 und der Stirnfläche 46 gebildeter Spalt durch eine zumindest abschnittsweise, vorzugsweise durchgehende, Schweißnaht 48 geschlossen werden, so dass der Laufring 25 stoffschlüssig zum Grundkörper 14 verbunden ist. Bevorzugt ist eine Laserschweißung vorgesehen.

In einer alternativen und nicht näher dargestellten Ausführungsform des Aufnahmebereichs 33 ist die Seitenfläche 37 gegenüber einer radialen Ebene nach außen geneigt vorgesehen. Dadurch kann ein vergrößerter Öffnungsspalt zwischen der Seitenfläche 37 und der axialen Stirnfläche 46 geschaffen werden, um eine Schweißnaht 48 zu legen.

Die Ausgestaltung der Anlagefläche 36 im Aufnahmebereich 33 kann auch der Gestalt vorgesehen sein, dass im Eckbereich der Schulter 42 ein Freistich 39 vorgesehen ist, wie dies in Figur 6b dargestellt ist. Im Übrigen gelten die vorherigen Ausführungen.

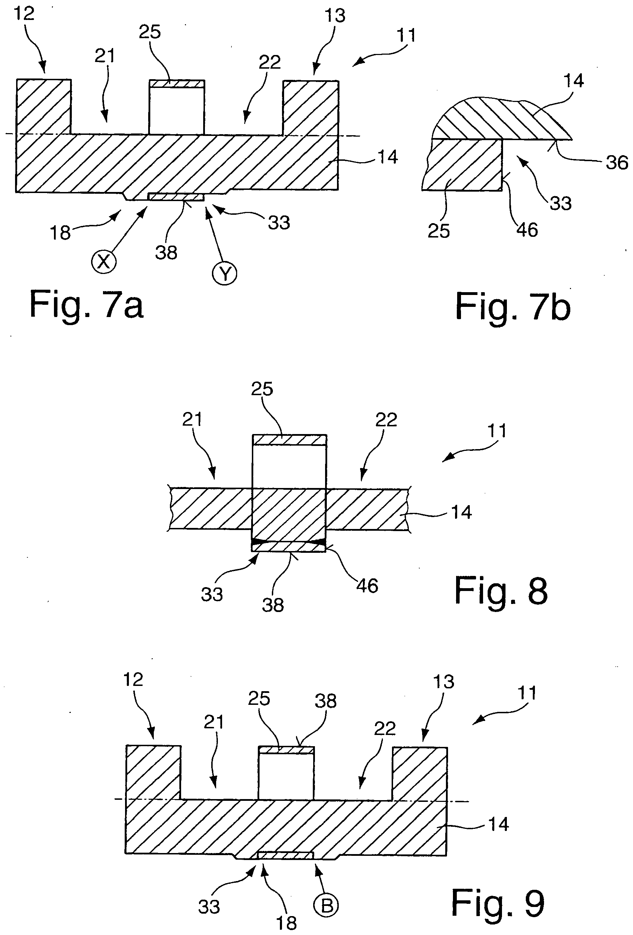

In Figur 7a ist eine schematische Schnittdarstellung einer alternativen Ausführungsform einer Ausgleichswelle gemäß Figur 5 dargestellt. Diese Ausführungsform gemäß Figur 7a weicht dahingehend ab, dass der Aufnahmebereich durch nur eine Anlagefläche 36 ausgebildet ist. Somit ist der Laufring 25 durch diese eine Anlagefläche 36 in axialer Richtung zur Ausgleichswelle in einer definierten Lage positioniert.

Detail X in Figur 7a entspricht den Figuren 6a, 6b, so dass hierauf Bezug genommen werden kann. Die gegenüberliegende axiale Stirnfläche 46 des Laufringes 25 ist frei gegenüber dem Aufnahmebereich 33 beziehungsweise erhebt sich gegenüber der Anlagefläche 36. In Figur 7b ist schematisch vergrößert das Detail Y in Figur 7a dargestellt. Bei dieser Ausführungsform ist vorgesehen, dass in dem Übergangsbereich zwischen der axialen Stirnfläche 46 und der Anlagefläche 36 des Aufnahmebereiches 33 eine Schweiß-, Löt- oder Klebeverbindung eingebracht werden kann. Des Weiteren kann alternativ vorgesehen sein, dass die Anlagefläche 36 sich nur bis zur axialen Stirnfläche 46 des Laufrings 25 erstreckt, so dass eine bessere Zugänglichkeit zur Bildung einer Schweißnaht zwischen dem Laufring 25 und dem Grundkörper 14 ermöglicht ist. Die Ausgestaltung von nur einer axialen Seitenfläche 37 am Aufnahmebereich 33 kann in einigen Anwendungsfällen genügen.

In Figur 8 ist eine alternative Ausführungsform einer Ausgleichswelle 11 im Längsteilschnitt dargestellt. Bei dieser Ausführungsform ist vorgesehen, dass der Aufnahmebereich 33 der Ausgleichswelle 11 gegenüber dem Grundkörper 14 hervorgehoben ist bzw. radial nach außen versetzt angeordnet ist. Bevorzugt ist die Anlagefläche 36 des Aufnahmebereiches 33 entsprechend der Breite des Laufringes 25 ausgebildet, so dass im Anlagebereich eine vollständige Abstützung erfolgen kann. Die bspw. dargestellte Schweiß- oder Lötverbindung kann an die axiale Stirnfläche 46 des Laufringes 25 angrenzen. Durch eine solche Ausgestaltung kann eine weitere Materialreduzierung der gesamten Ausgleichswelle, sofern dies erforderlich ist, ermöglicht werden. Diese Anlagefläche 36 kann auch größer oder kleiner als die Breite des Laufrings 25 im Aufnahmebereich 33 ausgebildet sein.

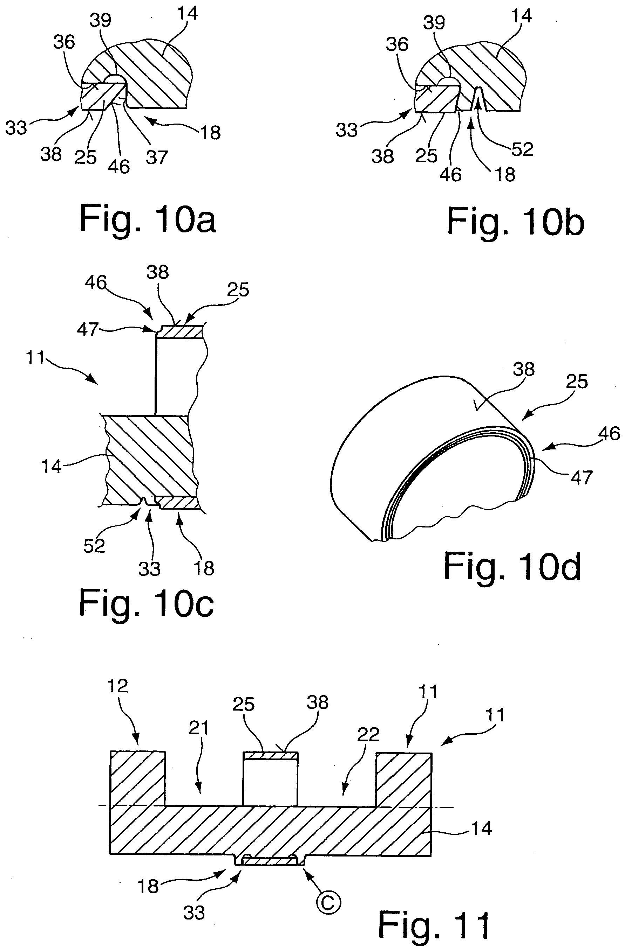

In Figur 9 ist eine alternative Ausgestaltung einer Ausgleichswelle 11 im Längsschnitt dargestellt. Bei dieser Ausführungsform ist eine kraft- und/oder formschlüssige Verbindung zur Positionierung des Laufringes 25 zum Grundkörper 14 bzw. zur Lagerstelle 16, 17 vorgesehen. Anstelle einer vorbeschriebenen stoffschlüssigen Verbindung durch Schweißen oder Löten erfolgt bei dieser Ausführungsform eine Fixierung des Laufringes 25 durch ein Verpressen oder ein Verstemmen, wie dies in Fig. 10 a und b vergrößert dargestellt ist. Dadurch sind der Aufnahmebereich 33 und die daran angrenzende Umfangsfläche 18 angepasst. Bei dieser Ausführungsform grenzt die Anlagefläche 36 nicht unmittelbar an die Seitenfläche 37 an, sondern ist durch einen Freistich 39 getrennt. Die Anlagefläche 36 ist bspw. in axialer Richtung durchgehend ausgebildet. Alternativ können auch nur einzelne Auflageabschnitte vorgesehen sein. Der Laufring 25 weist axiale Stirnflächen 46 auf, die gemäß einer ersten Ausführungsform (Fig. 10a und b) in Richtung auf die Lauffläche 38 des Laufringes 25 zumindest geringfügig geneigt ausgebildet sind. Zum Verpressen beziehungsweise Verstemmen wird nach dem Positionieren des Laufringes 25 zum Aufnahmebereich 33 benachbart im Randbereich 51 eine Kerbe 52 eingebracht, um eine Materialverdrängung zu erzielen, so dass die Seitenfläche 37 des Aufnahmebereiches 33 kraft- und formschlüssig an der geneigten, axialen Stirnfläche 46 des Laufringes 25 anliegt und angreift und somit den Laufring 25 in dem Aufnahmebereich 33 fixiert.

In Figur 10c und d ist eine schematische Detailansicht einer alternativen Ausgestaltung einer Stirnfläche 46 des Laufringes 25 dargestellt. Bei dieser alternativen Ausführungsform ist vorgesehen, dass die Stirnfläche 46 bspw. eine einstufige Schulter 47 aufweist. Diese Schulter 47 erstreckt sich bspw. über ein Viertel, ein Drittel oder die Hälfte der Dicke des Laufringes 25. Nach dem Verstemmen des Randbereichs 51 erfolgt wiederum durch die Materialverdrängung eine kraft- und/oder formschlüssige Fixierung des Laufringes 25 zum Aufnahmebereich 33. Diese Schulter 47 ist in der Wirkung analog zur geneigten Stirnseitenfläche 46. Alternativ zur Schulter 47 kann auch eine mehrstufige Schulter ausgebildet sein. Ebenso können verschiedentliche Konturen an der Seitenfläche einzeln oder in Kombination miteinander vorgesehen sein, welche die Wirkung erzielen, dass nach dem Verstemmen oder Verpressen des Randbereiches 51 eine Verankerung mit dem Randbereich 51 gegeben ist bzw. dass diese Kontur den Randbereich des Aufnahmebereiches 33 hintergreift. Ergänzend kann vorgesehen sein, dass in radialer umfangsrichtung die mit einer Kontur ausgebildete Seitenfläche Erhöhungen oder Vertiefungen aufweist, so dass zusätzlich eine radiale Fixierung gegeben ist.

In Figur 11 ist eine weitere alternative Ausführungsform der Ausgleichswelle 11 im Längsschnitt dargestellt. Bei dieser Ausführungsform ist der Laufring 25 durch eine Umbördelung zum Aufnahmebereich 33 fixiert. Das Detail C gemäß Figur 11 ist in den Figuren 12a und 12b näher dargestellt, wobei die Figur 12a einen ersten Fertigungsschritt und die Figur 12b die vollständig erfolgte Umbördelung zur Fixierung des Laufringes 25 in der Lagerstelle 16, 17 darstellt. Zur Herstellung der Umbördelung ist im Randbereich, der an den Aufnahmebereich 33 angrenzt, eine umlaufende Wulst 51 an der Umfangsfläche 18 vorgesehen. Durch diese Wulst 51 ist eine Materialansammlung gegeben, die für den späteren Umbördelvorgang vorgesehen ist. Damit eine gute Fixierung des Laufringes 25 in dem Aufnahmebereich 33 gegeben ist, weist der Laufring 25 eine zur Lauffläche 38 geneigte Stirnfläche 46 auf. Nach dem Positionieren und gegebenenfalls Einpressen des Laufringes 25 wird die Wulst 51 auf die Stirnfläche 46 zugetrieben, so dass die Stirnfläche 46 durch eine Art Hinterschneidung, die durch die umbördelte Wulst 51 gebildet wird, in dem Aufnahmebereich 33 fixiert gehalten.ist.

Alternativ zu den in den Figuren 11, 12a und b dargestellten Ausführungsform kann vorgesehen sein, dass der Aufnahmebereich 33 eine Seitenfläche 37 aufweist, welche durch eine Drehbearbeitung mit einem Hinterschnitt ausgebildet ist, so dass gegenüberliegend nur ein Umbördelvorgang notwendig ist.

In den Figuren 13a bis c ist eine weitere alternative Ausführungsform der Ausgleichswelle 11 dargestellt. Bei dieser Ausgleichswelle 11 ist vorgesehen, dass der Grundkörper 14 im Bereich der Lagerstelle 16, 17 eine Umfangsfläche 18 aufweist, welche einen Winkel von weniger als 180° einschließt, wobei die Umfangsfläche 18 in dem Bereich liegt, in dem die Zentrifugalkraft wirkt. Zwischen den beiden äußeren Enden der Umfangsfläche 18 erstreckt sich eine Versteifungskontur 54, welche gemäß dem dargestellten Ausführungsbeispiel dachförmig, insbesondere durch zwei Stülpflächen 34, ausgebildet ist. Diese Versteifungskontur 54 bildet bevorzugt mit der Umfangsfläche 18 eine Querschnittsfläche, bei der die Rotationsachse 27 außerhalb der Querschnittsfläche liegt. Eine solche Ausgestaltung weist den Vorteil auf, dass solche Ausgleichswellen 11 in der Schmiedetechnik einfach herstellbar sind. Alternativ kann die Versteifungskontur mit der Umfangsfläche auch eine Querschnittsfläche bilden, bei der die Rotationsachse innerhalb der Querschnittsfläche liegt. Zwischen der Versteifungskontur 54 und der Umfangsfläche 30 der Unwuchtgewichtsabschnitte 21, 22, 23, 24 oder der Umfangsfläche 18 kann ein- oder beidseitig benachbart eine weitere Stülpfläche 34' vorgesehen sein. Bei diesem Ausführungsbeispiel in Figur 13a bis c ist der Laufring 25 anhand der vorbeschriebenen Ausführungsform gemäß den Figuren 10c und d zur Umfangsfläche 18 befestigt. Der Laufring 25 kann auch gemäß den weiteren vorbeschriebenen Ausführungsformen sowie auch gemäß den nachfolgend noch beschriebenen Ausführungsformen befestigt werden und ausgebildet sein.

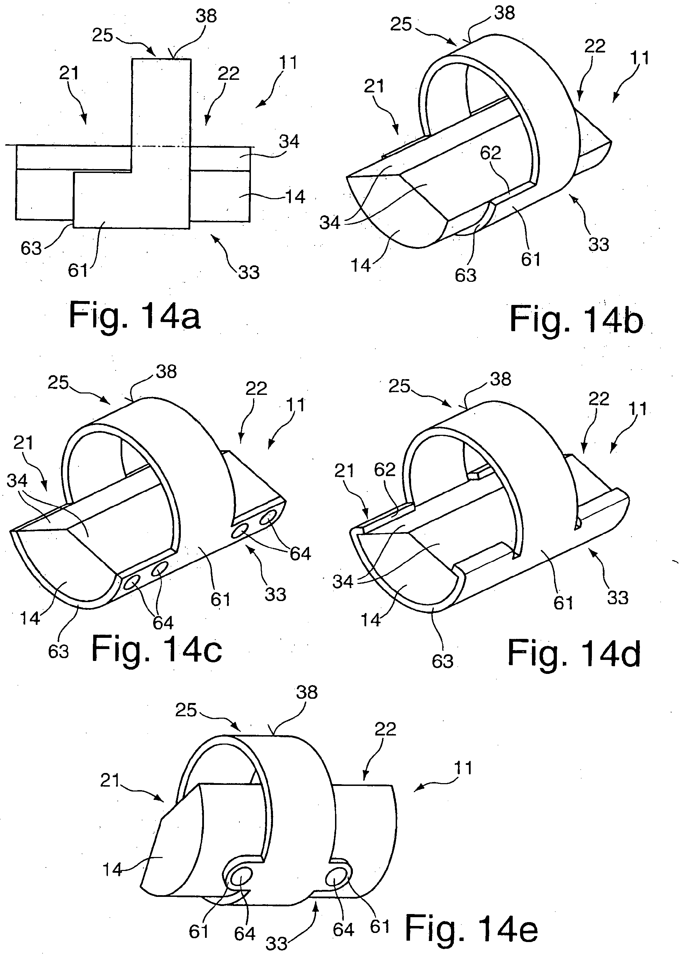

In Figur 14a und b ist eine weitere alternative Ausführungsform der Ausgleichswelle 11 in der Seitenansicht und perspektivisch dargestellt. Bei dieser Ausführungsform ist vorgesehen, dass die Geometrie des Laufringes 25 durch die zusätzliche Anordnung eines Stützabschnittes 61 bzw. Befestigungsabschnittes abgewandelt ist. Dabei kann vorgesehen sein, dass sich der Stützabschnitt 61 ein- oder beidseitig zum vollumfänglich verlaufenden Laufring 25 in axialer Richtung erstreckt, wobei in radialer Richtung dieser zumindest sich teilweise erstreckt, jedoch nicht vollumfänglich ausgebildet ist. Bevorzugt erstreckt sich der Stützabschnitt 61 in radialer Umfangsrichtung über den Umfangsbereich, über welchen sich der Aufnahmebereich 33 erstreckt, bis sich die Stülpfläche 34 daran anschließt. Durch die Ausgestaltung des Stützabschnittes 61 kann ein vergrößerter Befestigungsbereich geschaffen werden, um den Laufring 25 im Aufnahmebereich 33 zu fixieren. Bspw. kann entlang der radialen Stirnfläche 61 eine zusätzliche Befestigung mit dem Grundkörper 14 ermöglicht werden. Darüber hinaus kann dadurch der Vorteil erzielt werden, dass Befestigungsbereiche außerhalb der Lauffläche 38 des Laufrings 25 geschaffen werden, deren Ausgestaltung unabhängig von der Lauffläche 38 des Laufringes 25 sind. Die Anordnung des Laufringes 25 zum Aufnahmebereich 33 kann die vorstehend beschriebenen Ausführungsformen umfassen. Die in den Figuren 13a und b dargestellte Ausführungsform entspricht in der Positionierung und Ausgestaltung des Laufrings 25 im Wesentlichen den Figuren 7a und b bzw. der dazu beschriebenen Alternativen.

In den Figuren 14c und d sind perspektivisch dargestellt alternative Ausführungsformen zu Figur 14a und b dargestellt. Bei den in Figur 14c und d dargestellten Ausführungsformen sind beidseitig zum vollumfänglichen Laufring 25 Stützabschnitte 61 vorgesehen. Bei diesen Ausführungsformen wird ermöglicht, dass bspw. entlang der radialen Stirnfläche 62 die Anbringung einer Schweißnaht vorgesehen ist. Alternativ oder zusätzlich kann eine axial verlaufende Schweißnaht entlang der axialen Stirnfläche 63 gegeben sein. Des Weiteren kann alternativ vorgesehen sein, dass aufgrund der großflächigen Anlage des Laufringes 25 am Grundkörper 14 eine Klebeverbindung ermöglicht ist. Alternativ oder zusätzlich kann auch ein Punktschweißen erfolgen, wie bspw. symbolisch durch die dargestellten Punkte 64 dargestellt ist. Darüber hinaus kann auch eine vielfältige Kombination der vorgenannten Befestigungsmöglichkeiten gegeben sein.

In Figur 14d ist eine weitere alternative Ausführungsform zur Fixierung des Laufringes 25 am Aufnahmebereich 33 gegeben, in dem die Stirnfläche 62 umgebördelt wird, so dass eine radiale und/oder axiale Fixierung des Laufringes 25 zum Aufnahmebereich 33 gegeben ist. Ergänzend kann zum Umbördeln noch eine Schweißnaht, eine Klebeverbindung und/oder eine Punktschweißverbindung vorgesehen sein.

In Figur 14e ist schematisch vereinfacht eine weitere alternative Ausgestaltung der Befestigung des Laufringes 25 zur Ausgleichswelle 11 dargestellt. Bei dieser Ausführungsform sind am Laufring 25 als Laschen ausgebildete Stützabschnitte oder Befestigungsabschnitte 61 vorgesehen, welche durch Punktschweißen, Nieten, Schrauben oder dergleichen zum Grundkörper 14 der Ausgleichswelle 11 befestigt sind.

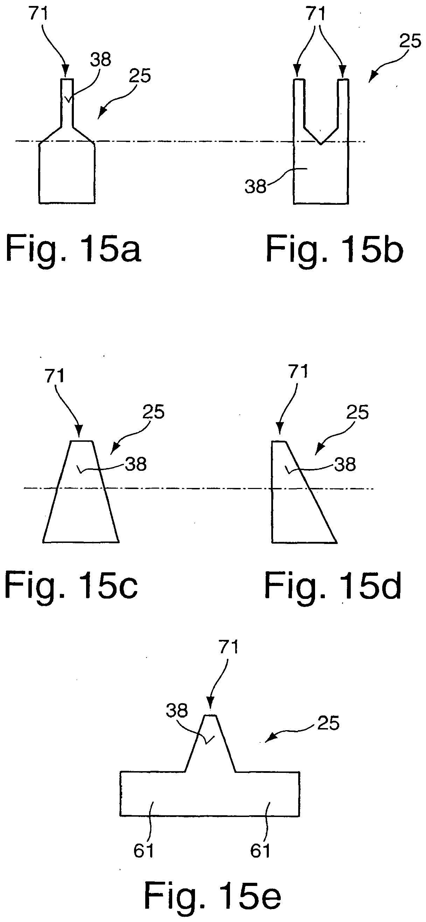

In den Figuren 15a bis d sind verschiedenen Ausführungsformen eines Laufringes 25 beispielhaft dargestellt. Anstelle eines Laufringes 25 mit einer konstanten Breite kann bspw. gemäß Figur 15a ein Laufring 25 vorgesehen sein, der im Bereich der Unwuchtgewichtsabschnitte 21, 22, 23 und 24 mit konstanter Breite ausgebildet ist und in dem gegenüberliegenden Bereich bzw. in dem der wirkenden Zentrifugalkraft gegenüberliegenden Bereich einen reduzierten Stegabschnitt aufweist, der sich bis zum oberen Scheitelpunkt 71 erstreckt. Bevorzugt erfolgt die Reduzierung der Breite des Laufrings 25 bei dieser Ausführungsform erst au-ßerhalb des Aufnahmebereichs 33. Alternativ zu der in Figur 15a dargestellten Kontur, bei der ein Übergangsbereich zwischen dem schmalen und breiten Abschnitt des Laufrings 25 vorgesehen ist, kann der Verjüngungsbereich anstelle der dargestellten Verjüngung sich auch bis zum Punkt 71 kontinuierlich sowie auch diskontinuierlich verjüngen. In Figur 15b ist eine alternative Ausführungsform eines Laufringes 25 zu Figur 15a dargestellt. Dabei ist vorgesehen, dass außerhalb des Aufnahmebereiches 33 bspw. zwei stegförmig ausgebildete Laufringabschnitte ausgebildet sind.

In Figur 15c ist eine weitere alternative Ausführungsform des Laufringes 25 dargestellt. Dabei ist vorgesehen, dass sich von dem tiefsten Punkt der Unwucht innerhalb des Aufnahmebereiches 33 bis zum gegenüberliegenden Punkt 71 sich die Breite des Laufringes kontinuierlich verjüngt. Diese Verjüngung kann auch diskontinuierlich und auch asymmetrisch sein. Eine alternative Ausführungsform hierzu ist bspw. in Figur 15d dargestellt, bei der nur eine einseitige Abnahme der Breite des Laufringes 25, die kontinuierlich als auch diskontinuierlich sein kann, vorgesehen ist.

Figur 15e zeigt eine alternative Ausführungsform zu den Figuren 14a und b, bei welchen die außerhalb des Aufnahmebereichs 33 liegende Lauffläche 38 des Laufringes 25 anstelle mit einer konstanten Breite mit einer abnehmenden Breite in Richtung Punkt 71 ausgebildet ist. Die vorstehend alternativen Ausführungsformen des Laufringes 15a bis d au-ßerhalb des Aufnahmebereiches 33 können auch bei der Ausführungsform gemäß Figur 15e mit beidseitig sich erstreckenden Stützabschnitten 61 als auch mit nur einseitig sich erstreckenden Stützabschnitten 61 vorgesehen sein.

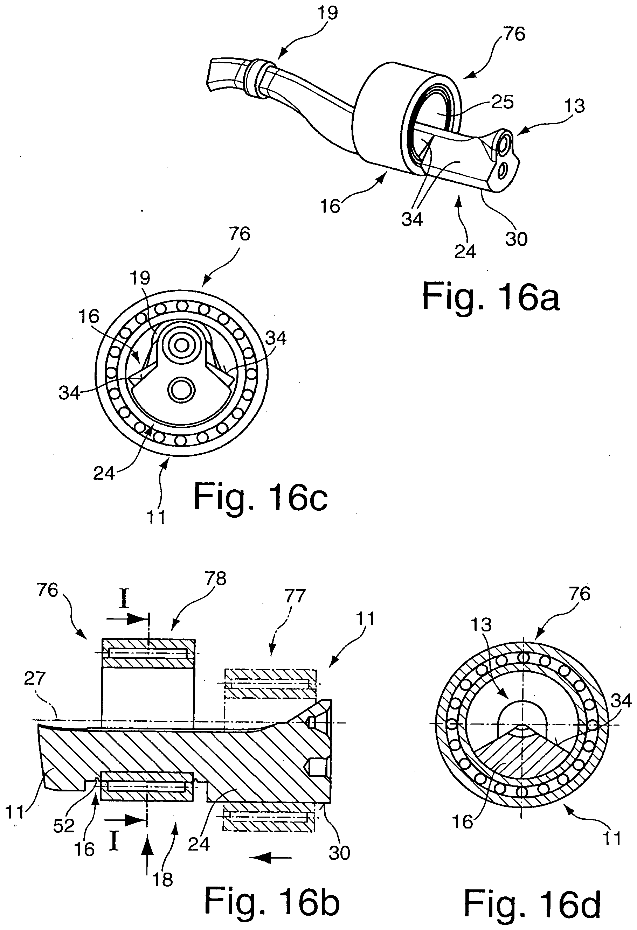

In Figur 16a ist perspektivisch ein Ausschnitt einer alternativen Ausführungsform einer Ausgleichswelle 11 zu Figur 1 dargestellt. Diese Ausgleichswelle 11 entspricht dem prinzipiellen Aufbau der Ausgleichswelle 11 in Figur 1 und weist einen Endabschnitt 13 auf, an den sich ein Unwuchtgewichtsabschnitt 24 anschließt. Die Lagerstelle 16 nimmt anstelle eines Laufringes 25 ein Wälzlager 76 auf. Daran schließt sich ein weiterer Unwuchtgewichtsabschnitt 23 und/oder ein Verbindungsabschnitt 19 an. Die Befestigung des Wälzlagers 76 über dessen Innenring, welcher dem Laufring 25 in der Funktion gleichzusetzen ist, erfolgt analog der Befestigung des Laufringes 25, wie die in den vorstehenden Ausführungsbeispielen gemäß den Figuren 1 bis 13c beschrieben ist.

In Figur 16b ist ein schematischer Teilschnitt dargestellt, der eine erste Montageposition 77 und eine zweite Montageposition 78 des Wälzlagers 76 zeigt, um das Wälzlager 76 im Aufnahmebereich 33 der Lagerstelle 16 zu positionieren und zu fixieren. Die Figur 16c zeigt eine schematische Schnittdarstellung der ersten Montageposition 77, und Figur 16d zeigt eine Schnittdarstellung der Lagerstelle 16 beziehungsweise der zweiten Montageposition 78.

Bei dieser Ausführungsform ist beispielsweise vorgesehen, dass der Umfangswinkel, über den sich die Umfangsfläche 18 der Lagerstelle 16 erstreckt, größer als der Umfangswinkel der Umfangsfläche 30 des Unwuchtgewichtsabschnittes 24 ist. Die Umfangsfläche 30 des Unwuchtgewichtsabschnittes 24 erstreckt sich bei diesem Ausführungsbeispiel unmittelbar bis zu einer Stirnseite des Endabschnittes 13. Alternativ kann dies auch vertauscht oder die Umfangswinkel der Umfangsflächen 18, 30 können gleich ausgebildet sein. Aus Figur 16c ist zu erkennen, dass ein Stülpdurchmesser im Bereich des Endabschnittes 13 kleiner ausgebildet ist als ein Innendurchmesser des Laufringes 25 beziehungsweise Innenringes des Wälzlagers 76. Analoges gilt für die Ausgestaltung der Umfangsfläche 18 und Stülpflächen 34 in der Lagerstelle 16, wie dies ebenfalls in Figur 16c dargestellt ist. Dadurch kann das Wälzlager 76 beziehungsweise der Laufring 25 zunächst über den Endabschnitt 13 in eine erste Montageposition 77 übergeführt werden. Anschließend erfolgt ein weiteres Aufstecken des Wälzlagers 76 beziehungsweise Lagerringes 25 in axialer Richtung bis zur Lagerstelle 16. Daran anschließend erfolgt eine vertikal dazu ausgerichtete Aufsetzbewegung des Laufringes 25 beziehungsweise des Wälzlagers 76, um die zweite Montageposition 78 einzunehmen. Die anschließende Befestigung des Laufringes 25 beziehungsweise des Wälzlagers 76 im Aufnahmebereich 33 erfolgt gemäß den vorstehend beschriebenen Ausführungsbeispielen. In Figur 16d ist die Schnittdarstellung gemäß der Linie I-I in Figur 16b zur Verdeutlichung der Montageposition 78 nochmals dargestellt.

Alternativ kann auch bei einer solchen Ausführungsform der Ausgleichswelle gemäß Figur 16a eine weitere Stülpfläche 34' vorgesehen sein, wie dies beispielsweise in Figur 13c dargestellt ist. Gleiches kann für die Lagerstelle 16 gelten.

Die Einhaltung des Stülpdurchmessers kann auch bei einer Ausführungsform vorgesehen sein, bei dem sich an die Lagerstelle 16 ein weiterer Unwuchtgewichtsabschnitt anschließt und im Anschluss daran anstelle einer Verbindungsstelle 19 eine weitere Lagerstelle ausgebildet ist. Auch für eine solche Ausführungsform gelten die vorbeschriebenen Merkmale und Alternativen.

Die beispielhaft beschriebenen Ausführungsformen des Aufnahmebereiches und der kraft- und/oder form- und/oder stoffschlüssigen Fixierungsmöglichkeiten des Laufringes 25 im Aufnahmebereich 33 können ebenso bei allen Ausführungsformen und alternativ in der in der WO 2007/121861 A1 aufgeführten Ausgleichswelle vorgesehen sein.

## Patentansprüche

1. Ausgleichswelle für einen Ein- oder Mehrzylindermotor mit wenigstens einem Unwuchtgewichtsabschnitt (21, 22; 23, 24) und wenigstens einer Lagerstelle (16, 17), die dem wenigstens einen Unwuchtgewichtsabschnitt (21, 22; 23, 24) zugeordnet ist, wobei die Lagerstelle (16, 17) eine radiale Umfangsfläche (18) aufweist, welche sich nur partiell über einen Umfang der Lagerstelle (16, 17) erstreckt, so dass eine bei Rotation der Ausgleichswelle (11) resultierende Zentrifugalkraft innerhalb einem Bereich der Lagerstelle (16, 17) liegt, der durch die partiell über den Umfang der Lagerstelle (16, 17) sich erstreckenden Umfangsfläche (18) gebildet ist, und mit einem Laufring (25), der die partiell ausgebildete Umfangsfläche (18) der Lagerstelle (16, 17) umgibt und durch eine kraft- und/oder form- und/oder stoffschlüssige Verbindung mit der Lagerstelle (16, 17) verbunden ist, **dadurch gekennzeichnet,**
- **dass** die Umfangsfläche (18) der Lagerstelle (16, 17) zur Aufnahme des Laufringes (25) einen Aufnahmebereich (33) aufweist und zumindest ein axial äußerer Randbereich und zumindest ein ringförmiger Bereich des Laufringes (25) mit einer axialen Seitenfläche (37) und einer Anlagefläche (36) des Aufnahmebereiches (33) kraft- und/oder form- und/oder stoffschlüssig verbunden ist, oder
- **dass** der Laufring (25) an seine Lauffläche (38) angrenzend in axialer Richtung einen Stützabschnitt (61) aufweist, welcher sich zumindest teilweise in radialer Richtung, jedoch nicht vollumfänglich erstreckt und mit zumindest einer radialen oder axialen Stirnfläche (62, 63) mit dem Aufnahmebereich (33) oder Grundkörper (14) verbunden ist.

2. Ausgleichswelle nach Anspruch 1, **dadurch gekennzeichnet, dass** an der Umfangsfläche (18) der Lagerstelle (16, 17) in Umfangsrichtung angrenzend zumindest eine Stülpfläche (34) vorgesehen ist, welche die Querschnittsfläche der Lagerstelle (16, 17) verringert.

3. Ausgleichswelle nach Anspruch 1, **dadurch gekennzeichnet, dass** der Aufnahmebereich (33) vertieft ausgebildet ist und zumindest eine Anlagefläche (36) aufweist, die ringförmig ausgebildet ist und sich zumindest teilweise entlang der Breite des Aufnahmebereiches (33) erstreckt.

4. Ausgleichswelle nach Anspruch 3, **dadurch gekennzeichnet, dass** die Anlagefläche (36) des Aufnahmebereiches (33) gegenüber der Umfangsfläche (18) radial nach innen zur Rotationsachse (27) versetzt derart vorgesehen ist, dass eine Lauffläche (38) des Laufringes (25) gegenüber der angrenzenden Umfangsfläche (18) radial hervorsteht.

5. Ausgleichswelle nach einem der vorhergehenden Ansprüche, **dadurch gekennzeichnet, dass** jeweils an eine axiale Seitenfläche (37) des Aufnahmebereiches (33) eine radiale Anlagefläche (36) angrenzt und eine Anlageschulter (42) für den Laufring (25) ausbildet.

6. Ausgleichswelle nach einem der vorhergehenden Ansprüche, **dadurch gekennzeichnet, dass** zumindest eine axiale Stirnfläche (46) des Laufringes (25) an zumindest einer axialen Seitenfläche (37) des Aufnahmebereiches (33) positioniert sind.

7. Ausgleichwelle nach einem der vorhergehenden Ansprüche, **dadurch gekennzeichnet, dass** der in dem vertieften Aufnahmebereich (33) einsetzbare und durch ein Härteverfahren behandelte Laufring (25) einen unbehandelten Randbereich aufweist.

8. Ausgleichswelle nach Anspruch 1, **dadurch gekennzeichnet, dass** die Anlagefläche (37) des Aufnahmebereichs (33) gegenüber einem benachbarten Abschnitt der Ausgleichswelle erhöht oder radial hervorstehend ausgebildet ist.

9. Ausgleichswelle nach einem der vorhergehenden Ansprüche, **dadurch gekennzeichnet, dass** zur Fixierung des Laufringes (25) in dem vertieften Aufnahmebereich (33) eine Umbördelung durch den an den Aufnahmebereich (33) angrenzenden Randbereich (51), insbesondere eine an der Umfangsfläche (18) angeordnete Wulst (51), vorgesehen ist.

10. Ausgleichswelle nach Anspruch 9, **dadurch gekennzeichnet, dass** an der zumindest einen Stirnfläche (46) des Laufringes (25) eine ein- oder mehrstufige, zumindest teilweise umlaufende Kontur (47) oder eine zur Lauffläche (38) geneigte Stirnfläche (46) vorgesehen ist, welche nach der Umbördelung eines angrenzenden Randbereichs (51) als Hinterschneidung wirkt.

11. Ausgleichswelle nach Anspruch 1, **dadurch gekennzeichnet, dass** die Umfangsfläche (18) der Lagerstelle (16, 17) einen Umfangswinkel von weniger als 180° aufweist.

12. Ausgleichswelle nach Anspruch 11, **dadurch gekennzeichnet, dass** zwischen den radialen Enden der Umfangsfläche (18) der Lagerstelle (16, 17) eine Versteifungskontur (54) erstreckt, welche dachförmig, gegenläufig zur Umfangsfläche gekrümmt, nach außen gekrümmt oder mehreckförmig oder dergleichen ausgebildet ist.

13. Ausgleichswelle nach Anspruch 11 oder 12, **dadurch gekennzeichnet, dass** die Versteifungskontur (54) und die Umfangsfläche (18) eine Querschnittsfläche der Lagerstelle (16, 17) bilden, bei der die Rotationsachse (27) des Grundkörpers (14) außerhalb der Querschnittsfläche oder an die Versteifungskontur angrenzend liegt.

14. Ausgleichswelle nach einem der vorhergehenden Ansprüche, **dadurch gekennzeichnet, dass** ein Endabschnitt (12, 13) und/oder ein daran angrenzender Unwuchtgewichtsabschnitt (21, 24) und/oder eine daran angrenzende Lagerstelle (16, 17) jeweils einen Stülpdurchmesser aufweisen, der kleiner als ein Innendurchmesser des Laufringes (25) oder eines Innenringes eines Wälzlagers (76) ist.

## Claims

1. A balancing shaft for a single- or multi-cylinder engine comprising at least one unbalanced weight portion (21, 22; 23, 24) and at least one bearing point (16, 17), which is associated with the at least one unbalanced weight potion (21, 22; 23, 24), the bearing point (16, 17) comprising a radial peripheral surface (18) which extends, only in part, over a periphery of the bearing point (16, 17) so that a centrifugal force resulting from rotation of the balancing shaft (11) is situated in a region of the bearing point (16, 17) which is formed by the peripheral surface (18) extending, in part, over the periphery of the bearing point (16, 17), and comprising a raceway (25) which surrounds the partially formed peripheral surface (18) of the bearing point (16, 17) and is connected to the bearing point (16, 17) by a non-positive and/or positive and/or cohesive joint, **characterised in**
- **that** the peripheral surface (18) of the bearing point (16, 17) comprises a receiving region (33) for receiving the raceway (25), and in that at least an axially outer edge region or at least an annular region of the raceway (25) is connected to a contact surface (37) and a contact surface (36) of the receiving region (33) with a non-positive and/or positive and/or cohesive fit, or
- **that** the raceway (25) comprises a support portion (61) in the axial direction on its running surface (38) and adjacent thereto, which support portion extends in the radial direction, at least in part, but does not extend over the entire periphery and with at least one radial or axial end face (62, 63) of the support portion (61) is connected to the receiving region (33) or main body (14).

2. The balancing shaft according to claim 1, **characterised in that** at least one reverse-drawn surface (34) is provided adjacent to the peripheral surface (18) of the bearing point (16, 17) in the peripheral direction and reduces the cross-sectional area of the bearing point (16, 17).

3. The balancing shaft according to claim 1, **characterised in that** the receiving region (33) is recessed and comprises at least one contact surface (36) which is annular and extends along the width of the receiving region (33), at least in part.

4. The balancing shaft according to claim 3, **characterised in that** the contact surface (36) of the receiving region (33) is offset radially inwardly from the axis of rotation (2) in relation to the peripheral surface (18), in such a way that a running surface (38) of the raceway (25) protrudes radially in relation to the adjacent peripheral surface (18).

5. The balancing shaft according to any one of the preceding claims, **characterised in that** a radial contact surface (36) bears against an axial side face (37) of the receiving region (33) and forms a contact shoulder (42) for the raceway (25).

6. The balancing shaft according to any one of the preceding claims, **characterised in that** at least one axial end face (46) of the raceway (25) is positioned on at least one axial side face (37) of the receiving region (33).

7. The balancing shaft according to any one of the preceding claims, **characterised in that** the raceway (25), placeable in the receiving region (33), which is recessed, and treated by a hardening procedure, comprises an untreated edge region.

8. The balancing shaft according to claim 1, **characterised in that** the contact surface (37) of the receiving region (33) is raised or radially prominent in relation to an adjacent portion of the balancing shaft.

9. The balancing shaft according to any one of the preceding claims, **characterised in that**, to fix the raceway (25) in the recessed receiving region (33), a flange is provided on the edge region (51) adjacent to the receiving region (33), in particular by a bead (51) arranged on the peripheral surface (18).

10. The balancing shaft according to claim 9, **characterised in that** a single- or multi-stepped contour (47), which is peripheral, at least in part, is provided on the at least one end face (46) of the raceway (25) or that an end face (46) inclined to the raceway (25) is provided, which acts as an undercut after providing the flange of an adjacent edge region (51).

11. The balancing shaft according to claim 1, **characterised in that** the peripheral surface (18) of the bearing point (16, 17) has a peripheral angle of less than 180°.

12. The balancing shaft according to claim 11, **characterised in that** a reinforcing contour (54) extends between the radial ends of the peripheral surface (18) of the bearing point (16, 17), which is roof-shaped, is curved in the opposite direction to the peripheral surface, is curved outwardly or is polygonal or the like.

13. The balancing shaft according to either claim 11 or claim 12, **characterised in that** the reinforcing contour (54) and the peripheral surface (18) form a cross-sectional area of the bearing point (16, 17), the axis of rotation (27) of the main body (14) lying outside the cross-sectional area or adjacent to the reinforcing contour.

14. The balancing shaft according to any one of the preceding claims, **characterised in that** an end portion (12, 13) and/or an adjacent unbalanced weight portion (21, 24) and/or an adjacent bearing point (16, 17) each have a reverse-drawn diameter which is smaller than an inner diameter of the raceway (25) or of an inner ring of a rolling bearing (76).

## Revendications

1. Arbre d'équilibrage pour un moteur mono- ou polycylindrique, avec au moins une partie de contrepoids (21, 22; 23, 24) et au moins un point d'appui (16, 17) qui est affecté à ladite au moins une partie de contrepoids (21, 22; 23, 24), le point d'appui (16, 17) présentant une surface circonférentielle radiale (18) qui ne s'étend que partiellement sur une circonférence du point d'appui (16, 17) de sorte qu'une force centrifuge résultant de la rotation de l'arbre d'équilibrage (11) se situe à l'intérieur d'une zone du point d'appui (16, 17) laquelle est formée par la surface circonférentielle (18) s'étendant de manière partielle sur la circonférence du point d'appui (16, 17), et avec une bague de roulement (25) qui entoure la surface circonférentielle (18) partiellement formée du point d'appui (16, 17) et qui est reliée au point d'appui (16, 17) par conjugaison de force et/ou de forme et/ou de matière, **caractérisé en ce que**
- la surface circonférentielle (18) du point d'appui (16, 17) destinée à recevoir la bague de roulement (25) présente une zone de réception (33) et **en ce qu'**au moins une zone périphérique axialement extérieure et au moins une zone annulaire de la bague de roulement (25) sont reliées à une face latérale axiale (37) et à une surface d'appui (36) de la zone de réception (33) par conjugaison de force et/ou de forme et/ou de matière, ou
- la bague de roulement (25) présente, en sens axial, de manière contiguë à sa surface de roulement (38), une partie d'appui (61) qui s'étend au moins partiellement en sens radial mais non pas sur toute sa circonférence et qui est reliée, avec au moins une face frontale (62, 63) radiale ou axiale, à la zone de réception (33) ou au corps de base (14).

2. Arbre d'équilibrage selon la revendication 1, **caractérisé en ce qu'**au moins une surface coiffante (34) qui réduit la surface de la section transversale du point d'appui (16, 17) est prévue, en sens circonférentiel, de manière contiguë à la surface circonférentielle (18) du point d'appui (16, 17).

3. Arbre d'équilibrage selon la revendication 1, **caractérisé en ce que** la zone de réception (33) est formée de manière surbaissée et présente au moins une surface d'appui (36) qui est réalisée sous forme annulaire et s'étend au moins partiellement le long de la largeur de la zone de réception (33).

4. Arbre d'équilibrage selon la revendication 3, **caractérisé en ce que** la surface d'appui (36) de la zone de réception (33) est décalée par rapport à la surface circonférentielle (18), et ce radialement vers l'intérieur en direction de l'axe de rotation (27), de telle sorte qu'une surface de roulement (38) de la bague de roulement (25) fait saillie de manière radiale par rapport à la surface circonférentielle (18) contiguë.

5. Arbre d'équilibrage selon l'une quelconque des revendications précédentes, **caractérisé en ce qu'**une surface d'appui radiale (36) est respectivement contiguë à une face latérale axiale (37) de la zone de réception (33) et forme un épaulement d'appui (42) pour la bague de roulement (25).

6. Arbre d'équilibrage selon l'une quelconque des revendications précédentes, **caractérisé en ce qu'**au moins une face frontale axiale (46) de la bague de roulement (25) est positionnée contre au moins une face latérale axiale (37) de la zone de réception (33).

7. Arbre d'équilibrage selon l'une quelconque des revendications précédentes, **caractérisé en ce que** la bague de roulement (25) traitée par un procédé de durcissement et insérable dans la zone de réception (33) surbaissée présente une zone périphérique non traitée.

8. Arbre d'équilibrage selon la revendication 1, **caractérisé en ce que** la surface d'appui (37) de la zone de réception (33) est formée de manière surélevée ou fait saillie de manière radiale par rapport à une partie contiguë de l'arbre d'équilibrage.

9. Arbre d'équilibrage selon l'une quelconque des revendications précédentes, **caractérisé en ce qu'**un rabattement de la zone périphérique (51) contiguë à la zone de réception (33), en particulier un bourrelet (51) disposé sur la surface circonférentielle (18), est prévu en vue de fixer la bague de roulement (25) dans la zone de réception surbaissée (33).

10. Arbre d'équilibrage selon la revendication 9, **caractérisé en ce que** sur ladite au moins une face latérale (46) de la bague de roulement (25) est prévu un contour (47) au moins partiellement circonférentiel, à un ou plusieurs étagements, ou une face frontale (46) inclinée vers la surface de roulement (38) qui agit en tant que contre-dépouille après le rabattement d'une zone périphérique contiguë (51).

11. Arbre d'équilibrage selon la revendication 1, **caractérisé en ce que** la surface circonférentielle (18) du point d'appui (16, 17) présente un angle inscrit inférieur à 180°.

12. Arbre d'équilibrage selon la revendication 11, **caractérisé en ce qu'**entre les extrémités radiales de la surface circonférentielle (18) du point d'appui (16, 17) s'étend un contour de raidissement (54) qui est réalisé en forme de toit, de forme incurvée en sens contraire à la surface circonférentielle, de forme incurvée vers l'extérieur ou de forme polygonale ou autre forme semblable.

13. Arbre d'équilibrage selon la revendication 11 ou 12, **caractérisé en ce que** le contour de raidissement (54) et la surface circonférentielle (18) forment une surface de la section transversale du point d'appui (16, 17) au niveau duquel l'axe de rotation (27) du corps de base (14) se situe à l'extérieur de la surface de la section transversale ou est contiguë au contour de raidissement.

14. Arbre d'équilibrage selon l'une quelconque des revendications précédentes, **caractérisé en ce qu'**une partie d'extrémité (12, 13) et/ou une partie de contrepoids (21, 24) contiguë à celle-ci et/ou un point d'appui (16, 17) contiguë à celle-ci présentent respectivement un diamètre de coiffement qui est inférieur à un diamètre intérieur de la bague de roulement (25) ou d'une bague intérieure d'un palier de roulement (76).
